(19) **Europäisches Patentamt / European Patent Office / Office européen des brevets**

(11) **EP 1 259 779 B1**

(12) **FASCICULE DE BREVET EUROPEEN**

(45) Date de publication et mention
de la délivrance du brevet:
**31.12.2008 Bulletin 2009/01**

(21) Numéro de dépôt: **01913927.8**

(22) Date de dépôt: **02.03.2001**

(51) Int Cl.:
***G01D 3/06*** *(2006.01)*

(86) Numéro de dépôt international:
**PCT/FR2001/000625**

(87) Numéro de publication internationale:
**WO 2001/065210 (07.09.2001 Gazette 2001/36)**

(54) **DISPOSITIF AMPLIFICATEUR POUR CAPTEURS**

SENSORVERSTÄRKUNGSVORRICHTUNG

AMPLIFIER DEVICE FOR SENSORS

(84) Etats contractants désignés:
**AT BE CH CY DE DK ES FI FR GB GR IE IT LI LU MC NL PT SE TR**

(30) Priorité: **03.03.2000 FR 0002763**

(43) Date de publication de la demande:
**27.11.2002 Bulletin 2002/48**

(73) Titulaire: **CENTRE NATIONAL DE LA RECHERCHE SCIENTIFIQUE**
**75794 Paris Cedex 16 (FR)**

(72) Inventeurs:
• **TEMPLE-BOYER, Pierre**
  **F-31320 Castanet Tolosan (FR)**

• **SARRABAYROUSE, Gérard**
  **F-32330 Mouchan (FR)**
• **MARTINEZ, Augustin**
  **F-31650 Saint Orens (FR)**
• **LAUNAY, Jérôme**
  **F-09300 Belesta (FR)**

(74) Mandataire: **Bredema**
**38, avenue de l'Opéra**
**75002 Paris (FR)**

(56) Documents cités:
| US-A- 4 513 616 | US-A- 4 816 118 |
| US-A- 4 825 383 | US-A- 5 115 188 |

**Description**

**Domaine technique**

La présente invention concerne un dispositif amplificateur pour capteurs et un système de mesure d'une grandeur physique, équipé d'un tel dispositif.

Le dispositif de l'invention est destiné en particulier à des capteurs à réponse en tension et/ou en impédance. On entend par capteur à réponse en tension et/ou en impédance un capteur aux bornes duquel une variation de différence de potentiel et/ou une variation d'impédance traduisent la modification de la grandeur physique à laquelle le capteur est sensible.

L'invention trouve des applications dans la réalisation de systèmes de mesures et en particulier de systèmes de mesure incluant des capteurs miniaturisés ou intégrés, appelés micro-capteurs. A titre d'exemple, l'invention peut être mise à profit pour la réalisation de sondes thermiques, de dosimètres ou de photomètres.

**Etat de la technique antérieure**

Les capteurs à réponse en tension et/ou en impédance, mentionnés ci-dessus, peuvent être modélisés en considérant qu'ils sont équivalents à une source de tension fixe en série avec une impédance variable, à une source de tension variable en série avec une impédance fixe, ou une source de tension variable en série avec une impédance variable. Un tel capteur est connu du document US-4 513 616.

En désignant par $E_{Th}$ et $Z_{Th}$ les valeurs de tension et d'impédance du capteur, et par X une grandeur physique à laquelle le capteur est sensible, on peut définir des sensibilités en tension e et en impédance z du capteur telle que :

$$e = \frac{dE_{Th}}{dX}$$

et

$$z = \frac{dZ_{Th}}{dX}$$

Un capteur qui n'est sensible à une grandeur physique que par son impédance peut être caractérisé par : $dE_{Th}$ = 0 et $dZ_{Th}$ = zdX. Un capteur qui n'est sensible à une grandeur physique que par la source de tension peut être caractérisé par $dE_{Th}$ = edX et $dZ_{Th}$ = 0.

Les sensibilités (e et z) des capteurs aux grandeurs physiques sont souvent faibles. Ceci est particulièrement le cas lorsque les capteurs sont sensibles à des grandeurs physiques secondaires qui accompagnent un phénomène que l'on veut observer (mesures de la température à l'aide de résistances variables par exemple).

Une faible sensibilité des capteurs se traduit par une précision limitée des mesures et par une influence importante du bruit de mesure.

**Exposé de l'invention**

L'invention a pour but de proposer un dispositif amplificateur pour les capteurs et un système de mesure qui permettent d'éviter les limitations indiquées ci-dessus.

Un but est en particulier de proposer un dispositif amplificateur permettant d'obtenir un signal de mesure aux bornes d'une impédance additionnelle distincte du capteur.

Un but est encore de proposer un système de mesure dont la sensibilité aux grandeurs physiques à mesurer est grandement améliorée.

Un but est également de proposer un tel système qui autorise une bonne précision de mesure, qui soit peu sensible au bruit et qui permette ainsi une diminution des seuils de détection.

Pour atteindre ces buts, l'invention a plus précisément pour objet un dispositif amplificateur d'un capteur à réponse en tension et/ou impédance. Le dispositif comprend :

-   des moyens de contrôle de tension, connectés à des bornes de sortie du capteur pour imposer entre lesdites bornes une tension sensiblement constante,

- au moins une impédance dite additionnelle connectée en série avec le capteur dans un circuit de polarisation, entre des bornes de sortie dudit dispositif.

Grâce aux moyens de contrôle de tension, une modification de l'impédance équivalente du capteur ou une modification de la tension délivrée par la source de tension équivalente du capteur, se traduit par une modification du courant qui traverse le capteur. Ceci est dû au fait que la tension à ses bornes est imposée et fixe.

Or, comme l'impédance additionnelle est connectée en série avec le capteur dans le circuit de polarisation, le courant du capteur traverse aussi cette impédance. La modification du courant se retrouve donc sous forme de modification de la tension aux bornes de l'impédance additionnelle.

L'impédance additionnelle est connectée entre des bornes de sortie du circuit, de sorte que la variation de la tension aux bornes de l'impédance additionnelle soit incluse dans le signal de sortie.

Les bornes de sortie du dispositif sont par exemple les bornes de l'impédance additionnelle ou les bornes de l'ensemble formé par l'impédance additionnelle en série avec le capteur (aux bornes duquel la tension est constante).

Selon une réalisation particulière du dispositif de l'invention, les moyens de contrôle de tension peuvent comporter un transistor à effet de champ. Le capteur est alors connecté entre la grille et la source du transistor et l'impédance additionnelle est connectée entre la grille et le drain du transistor.

Le transistor est par exemple un transistor MOS (Metal-Oxyde-Semiconducteur) connecté en source commune et polarisé de préférence en régime de saturation. Le choix d'un courant de polarisation important permet en effet de garantir une bonne constance de la tension grille-source. Les moyens de polarisation peuvent comporter par exemple une source de courant connectée entre les source et drain du transistor.

L'invention concerne également un système de mesure d'une grandeur physique utilisant un capteur à réponse en tension ou en impédance, associé à un dispositif amplificateur tel que décrit.

Bien que réalisable avec tout type de capteur à réponse en tension et/ou en impédance le système de mesure peut comporter en particulier un capteur choisi parmi un thermocouple, un dosimètre, un capteur chimique ou un biocapteur. On entend par biocapteur un capteur sensible à des espèces organiques telles que l'ADN, des protéines diverses, des bactéries, etc..

D'autres caractéristiques et avantages de l'invention ressortiront de la description qui va suivre, en référence aux figures des dessins annexés. Cette description est donnée à titre purement illustratif et non limitatif.

**Brève description des figures**

- La figure 1 est une représentation schématique simplifiée d'un système de mesure conforme à l'invention ;

- La figure 2 est un schéma électrique représentant une possibilité de réalisation du système de mesure à partir d'un transistor à effet de champ ;

- Les figures 3 à 5 sont des schémas électriques illustrant trois applications particulières du système de mesure de la figure 2 ;

- La figure 6 est un graphique montrant l'évolution temporelle de la tension de sortie d'un système de mesure conforme à l'invention incluant un capteur de potentiel hydrogène ;

- La figure 7 est un graphique indiquant la valeur maximum d'une tension de sertie dudit système de mesure en fonction de valeurs de potentiel hydrogène mesurées dans une solution.

**Description détaillée de modes de mise en oeuvre de l'invention**

Dans la description qui suit, des éléments identiques similaires ou équivalents des différentes figures sont repérés avec les mêmes références numériques.

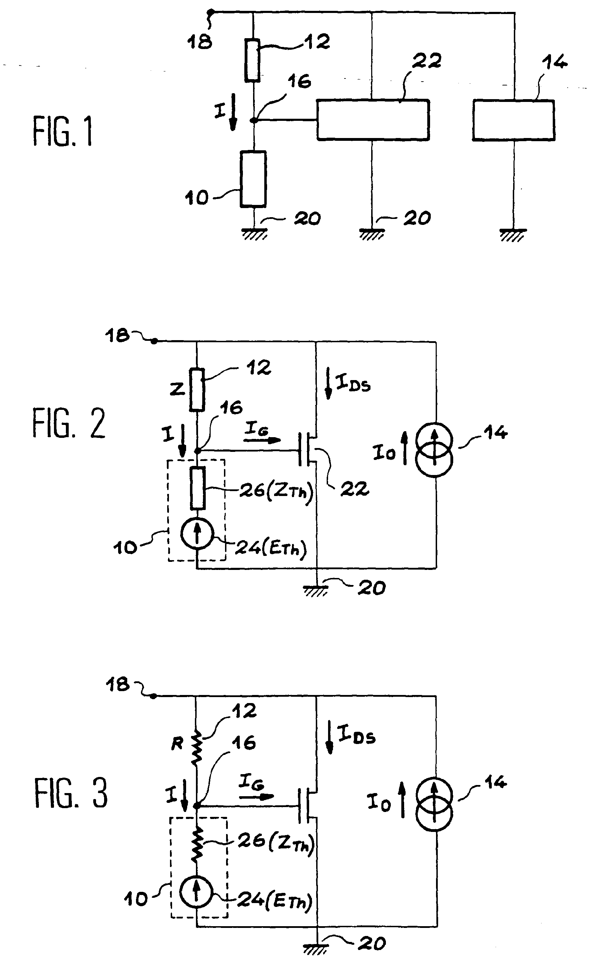

La figure 1 illustre le principe de fonctionnement général de l'invention.

Un capteur 10 et une impédance additionnelle 12 sont connectés en série dans un circuit de polarisation relié aux bornes de moyens de polarisation 14. Les moyens de polarisation 14 font circuler dans le capteur 10 et l'impédance additionnelle 12 un courant noté I sur la figure.

L'impédance additionnelle 12 est connectée entre un noeud 16, qui la relie au capteur 10, et une borne de sortie 18. Le capteur 10 est connecté entre le noeud 16 et une borne de masse 20.

Des moyens de contrôle de tension 22 sont également connectés au noeud 16. Ils imposent une tension constante aux bornes de la charge, c'est-à-dire, dans l'exemple de la figure, entre le noeud 16 et la borne de masse 20.

L'entrée du dispositif correspond aux bornes du capteur et la sortie en tension du dispositif peut être prise aux bornes de l'impédance additionnelle, c'est-à-dire entre le noeud 16 et la borne de sortie 18.

Comme la tension aux bornes du capteur est constante, la sortie du dispositif peut aussi être prise entre la borne de sortie 18 et la borne de masse 20. C'est cette deuxième solution qui est retenue dans la suite de la description.

La figure 2 montre une réalisation particulière du système de mesure dans lequel les moyens de contrôle de courant 22 comportent un transistor à effet de champ à grille isolée, par exemple du type MOSFET à canal N, et dans lequel les moyens de polarisation 14 comportent une source de courant. Le drain, la source et la grille du transistor 22 sont respectivement connectés à la borne de sortie 18, à la borne de masse 20 et au noeud 16.

La source de courant délivre un courant de valeur $I_0$ qui est dérivé en un premier courant de valeur $I_{DS}$ traversant le canal du transistor et en un deuxième courant I qui traverse l'impédance additionnelle 12. Le choix d'un fort courant de polarisation ($I_0 \gg I$) permet de faire fonctionner le transistor 22 dans un régime saturé et donc de fixer sa tension de grille (ici la tension grille-source) à une valeur d'équilibre quasiment constante. Cette valeur, imposée aux bornes du capteur 10, est notée $V_{GS0}$ dans la suite du texte.

Le courant I qui traverse l'impédance additionnelle 12 est sensiblement le même que le courant qui traverse la charge 10 en série avec l'impédance additionnelle. En effet, la valeur $I_G$ d'un courant de grille du transistor, partant du noeud 16, est extrêmement faible ($I \gg I_G$).

L'ensemble formé par le capteur 10 et l'impédance additionnelle 12 constitue un pont diviseur entre la tension drain-source du transistor, notée $V_{DS}$, et la tension grille-source.

Par ailleurs, l'impédance additionnelle 12, de valeur Z connectée entre le drain et la grille du transistor 22 agit comme une boucle de rétroaction permettant l'asservissement et la stabilisation de la tension grille-source, c'est-à-dire la tension aux bornes du capteur.

On observe sur la figure que le capteur 10 est modélisé comme une source de tension équivalente 24, de valeur $E_{Th}$, en série avec une impédance équivalente 26 de valeur $Z_{Th}$. La figure indique ces équivalents de Thévenin.

Comme la tension $V_{GSo}$ est constante, une variation $dE_{Th}$ ou $dZ_{Th}$ des caractéristiques $E_{Th}$, $Z_{Th}$ du capteur 10, en réponse à une variation de la grandeur physique à détecter, sont transformées en variation du courant I. Ces variations, amplifiées au travers de l'impédance additionnelle 12, de valeur Z, sont mesurées comme des variations $dV_{DS}$ de la tension drain-source $V_{DS}$ du transistor.

La variation $dV_{DS}$ peut être reliée aux variations $dZ_{Th}$ et $dE_{Th}$ par la relation suivante :

$$dV_{DS} = -(V_{GSo} - E_{Th}) \frac{Z}{Z_{Th}^2} dZ_{Th} - \frac{Z}{Z_{Th}} dE_{Th}$$

Pour des capteurs sensibles à une grandeur X seulement au travers de leur source de tension $E_{Th}$ équivalente avec une sensibilité e telle que $dE_{Th} = edX$ et $dZ_{Th} = 0$, le circuit est avantageux en particulier lorsque la condition suivante est satisfaite : $\left| \frac{Z}{Z_{Th}} \right| > 1$. Cette condition permet d'obtenir un signal de sortie de plus forte amplitude qu'un signal que délivrerait le capteur pris seul.

En d'autres termes, la valeur Z de l'impédance additionnelle est préférentiellement choisie supérieure à la valeur $Z_{Th}$ de l'impédance interne 26 du capteur.

Pour des capteurs sensibles à une grandeur physique seulement par l'impédance $Z_{Th}$ avec une sensibilité z telle que $dZ_{Th} = zdX$ et $dE_{Th} = 0$, le circuit est avantageux en particulier lorsque la condition suivante est vérifiée :

$$\left| (V_{VSo} - E_{Th}) \frac{Z}{Z_{Th}^2} \right| > 1.$$

La figure 3 illustre le système de mesure de la figure 2 adapté à un capteur thermique du type thermocouple.

Les thermocouples fonctionnent sur un principe mettant à profit l'effet Seebeck. Celui-ci relie les variations de la température T à des variations d'un potentiel thermoélectrique. L'impédance du thermocouple est cependant sensiblement invariable.

Ainsi, le thermocouple peut être modélisé, comme le montre la figure 3, par une source de tension variable 24 de valeur $E_{Th}$ en série avec une impédance 26, purement résistive, avec une valeur $R_{Th}$.

Dans cet exemple, il est préférable de choisir une impédance additionnelle 12 également purement résistive, de valeur R.

Dans le cas où le transistor 22 est un transistor de type MOS à canal N avec une tension de seuil $V_T$, un fonctionnement optimal est obtenu lorsque les relations suivantes sont vérifiées :

$$I_G \ll I \ll I_0$$

$$0 < V_T < V_{GSo} < V_{DS}$$

$$E_{Th} < V_{GSo}$$

$$\frac{R}{R_{Th}} > 1$$

En considérant la tension $V_{DS}$ comme tension de sortie, la sensibilité de mesure de la température $\dfrac{dV_{DS}}{dT}$ est amplifiée pour atteindre la valeur $\left| \dfrac{dV_{DS}}{dT} \right| = \dfrac{R}{R_{Th}}.a$ où a est la sensibilité intrinsèque du thermocouple.

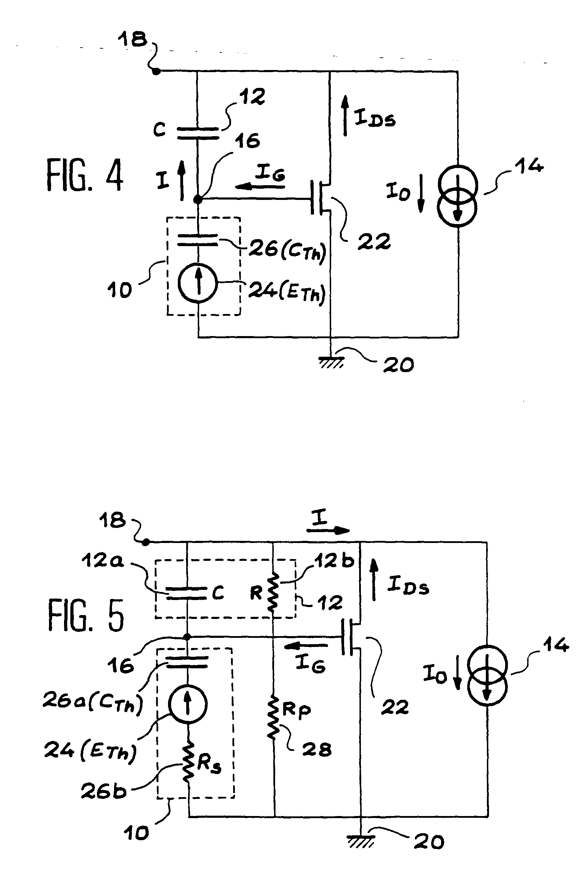

La figure 4 donne un autre exemple d'application de l'invention dans lequel le capteur 10 est un dosimètre, c'est-à-dire un capteur sensible aux rayonnements. Un tel composant utilise par exemple une capacité de type MOS (Metal-Oxyde-Semiconducteur). Le degré d'irradiation est mesuré par la variation d'un potentiel électrique $V_{Fb}$ dit potentiel de bande plate. Le capteur 10 peut donc être modélisé par une source de tension 24 variable, de valeur $E_{Th}$ et de sensibilité constante e en série avec une impédance 26 purement capacitive de valeur $C_{Th}$.

Dans l'exemple de la figure 4, l'impédance additionnelle 12 est aussi choisie purement capacitive et présente une valeur C. Le transistor 22 est un transistor MOS à canal P avec une tension de seuil $V_T$. On observe à ce sujet que le sens du courant $I_0$ est inversé par rapport aux figures précédentes qui correspondent à des montages autour d'un transistor à canal N.

Dans cet exemple, le circuit fonctionne de façon optimale avec des composants choisis pour satisfaire les relations suivantes :

$$I_G \ll I \ll I_0$$

$$V_{DS} < V_{GSo} < V_T < 0$$

$$V_{GSo} < E_{Th}$$

$$\frac{C_{Th}}{C} > 1.$$

En linéarisant la réponse de la capacité MOS et en définissant ainsi sa sensibilité intrinsèque s, la sensibilité de la mesure de dose de rayonnement D, notée $\dfrac{dV_{DS}}{dD}$ est telle que :

$$\frac{dV_{DS}}{dD} = \frac{C_{Th}}{C}\,s$$

La figure 5 donne un troisième exemple dans lequel le capteur 10 est une capacité ionosensible à effet de champ du type ISFEC (Ion Sensitive Field Effet Capacitor). De tels capteurs sont utilisés en pH-métrie. La mesure du pH d'une solution se fait au travers de la variation d'un potentiel électrique à une interface isolant/électrolyte.

Les capteurs de type ISFEC peuvent être modélisés par une source de tension variable 24 de valeurs $E_{Th}$ et de sensibilité s, en série avec une impédance sous la forme d'un condensateur MOS 26a de valeur capacitive constante $C_{Th}$, en série avec une résistance 26b de valeur $R_S$. Cette valeur résistive provient de la résistance série de l'électrolyte et d'une électrode de référence du capteur.

On peut observer sur la figure que l'impédance additionnelle 12 comprend une valeur capacitive C sous la forme d'un condensateur 12a, en parallèle avec une valeur résistive R sous la forme d'une résistance 12b.

On observe également qu'une résistance 28 de valeur $R_p$ est connectée en parallèle à la charge entre le noeud 16 et la borne de masse 20.

Des résistances de fuite, de fortes valeurs, correspondent aux fuites de courant de la capacité MOS 26a et de la capacité grille-source du transistor 22. Les résistances 12b et 28, de plus faibles valeurs, forment un pont diviseur et permettent de négliger ces résistances de fuite, dont la valeur est difficilement déterminable. Elles permettent donc de contrôler les courants de fuite.

L'amplification des propriétés de détection du pH obtenue dans le pont formé par le capteur 10 et le condensateur 12a est cependant atténuée par la valeur de la résistance série de valeur $R_S$ et les effets du pont des résistances 12b-28.

Ce transistor 22 est un transistor à canal P avec une tension de seuil $V_T$.

Pour un fonctionnement optimal du circuit, les composants sont choisis pour satisfaire les relations suivantes :

$$I_G \ll I \ll I_J$$

$$V_{DS} < V_{GSo} < V_T < 0$$

$$V_{GSo} < E_{Th}$$

$$\frac{C_{Th}}{C} > 1$$

$$\frac{C_{Th}}{C} > \frac{R}{R_p}$$

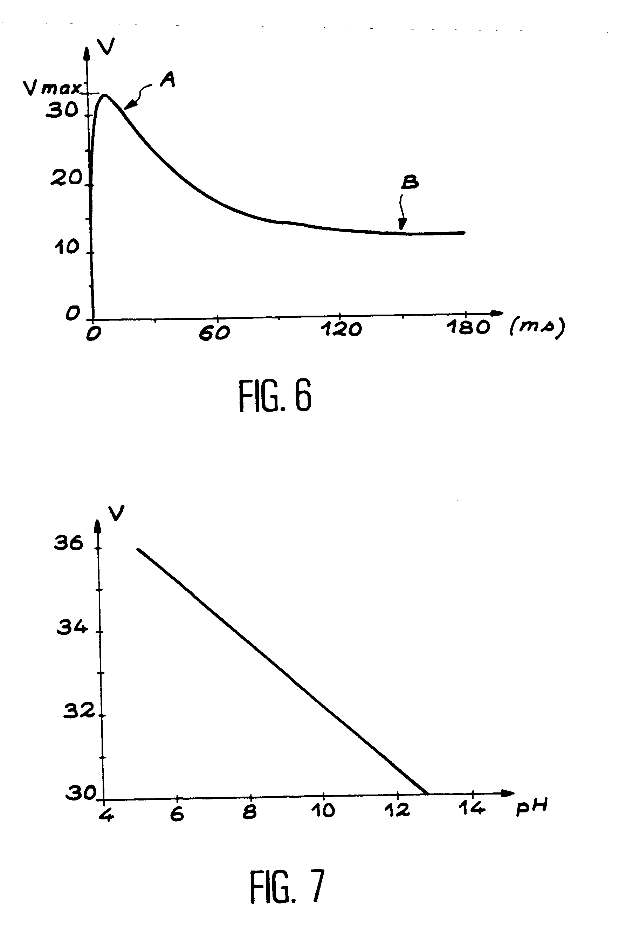

Le comportement de la tension $V_{DS}$ du système de la figure 5 est dynamique. Il présente d'abord un régime transitoire A lié aux effets du pont 10, 12a capteur/capacité puis d'un régime continu B lié au pont résistif 28, 12b. Ces régimes sont indiqués sur la figure 6. Celle-ci indique la tension $V_{DS}$, reportée en ordonnée et exprimée en Volt en fonction du temps reporté en abscisse et exprimé en millisecondes. Le maximum de tension $V_{max}$ est ainsi représentatif de l'amplification des propriétés de détection. La sensibilité de mesure du potentiel hydrogène est amplifiée pour atteindre la valeur :

$$\left|\frac{dV_{max}}{dpH}\right| \approx \alpha\,\frac{C_{Th}}{C}\,s\,.$$

Le rapport $\dfrac{C_{Th}}{C}$ est représentatif de l'amplification du pont capacitif alors que le coefficient $\alpha$ est représentatif de l'atténuation de l'amplification due au pont résistif (R, $R_p$) et à la résistance série $R_S(\alpha<1)$.

Au total, et sur une grande gamme de pH, l'invention permet une augmentation de la sensibilité de mesure du pH à des valeurs nettement supérieures au maximum théorique actuel (loi de Nernst : s $\approx$ 59 mV/pH à température ambiante) obtenu dans le cadre de techniques de caractérisation standards.

Ceci ressort de la figure 7 qui indique en ordonnée les tensions $V_{max}$ mesurées avec le système de la figure 5, en fonction du pH reporté en abscisse. Les tensions sont exprimées en Volt.

**Revendications**

1.   Dispositif amplificateur pour capteur (10) à réponse en tension comprenant :

  - des moyens de contrôle de tension (22), connectés à des bornes de sortie (16, 20) du capteur pour imposer entre lesdites bornes une tension sensiblement constante, et
  - au moins une impédance additionnelle (12) connectée en série avec le capteur dans un circuit de polarisation, **caracterisé en ce que**

  les bornes de sortie du dispositif amplificateur sont les bornes (18, 20) de l'ensemble formé par l'impédance additionnelle (12) en série avec le capteur (10).

2.   Dispositif selon la revendication 1, dans lequel les moyens de contrôle de tension (22) comportant un transistor à effet de champ avec une grille, une source et un drain, dans lequel le capteur (10) est connecté entre la grille et la source du transistor et dans lequel l'impédance additionnelle (12) est connectée entre la grille et le drain du transistor.

3.   Dispositif selon la revendication 1 dans lequel le transistor est du type MOS (Metal-Oxyde-Semiconducteur).

4.   Dispositif selon la revendication 1, comprenant des moyens de polarisation (14) pour polariser le transistor dans un régime de saturation.

5.   Dispositif selon la revendication 2, dans lequel les moyens de polarisation (14) comportent une source de courant connectée aux bornes de sortie (18, 20) et entre les source et drain du transistor (22).

6.   Système de mesure d'une grandeur physique comprenant un capteur (10) à réponse en tension et un dispositif amplificateur selon la revendication 1.

7.   Système de mesure selon la revendication 6, dans lequel le capteur est un thermocouple.

8.   Système selon la revendication 7, dans lequel le capteur présente un potentiel thermoélectrique (24) de valeur $E_{Th}$ et une impédance (26) de valeur purement résistive $R_{Th}$, dans lequel l'impédance additionnelle (12) présente une valeur résistive R et dans lequel les inégalités suivantes sont vérifiées :

$$I_G \ll I \ll I_0$$

$$0 < V_T < V_{GSo} < V_{DS}$$

$$E_{Th} < V_{GSo}$$

$$\frac{R}{R_{Th}} > 1$$

où $V_T$, $I_G$, $I_o$, $V_{DS}$, $V_{GSo}$ et I sont respectivement une tension de seuil d'un transistor à effet de champ à canal N, utilisé comme moyen de contrôle de tension, un courant de grille du transistor, un courant de polarisation du transistor, une tension drain-source du transistor, une tension de grille-source d'équilibre du transistor et un courant traversant le capteur.

**9.** Système selon la revendication , dans lequel le capteur est un dosimètre MOS équivalent à une source de tension variable (24) de valeur $E_{Th}$ et présentant une impédance (26) de valeur capacitive $C_{Th}$, dans lequel l'impédance additionnelle (12) présente une impédance capacitive C et dans lequel les inégalités suivantes sont vérifiées :

$$I_G << I << I_0$$

$$V_{DS} < V_{GSo} < V_T < O$$

$$V_{GSo} < E_{Th}$$

$$\frac{C_{Th}}{C} > 1$$

où $V_T$, $I_G$, $I_o$, $V_{DS}$, $V_{GSo}$ et I sont respectivement une tension de seuil d'un transistor à effet de champ à canal P, utilisé comme moyen de contrôle de tension, un courant de grille du transistor, un courant de polarisation du transistor, une tension drain-source du transistor, une tension de grille-source d'équilibre du transistor et un courant traversant le capteur.

**10.** Système selon la revendication 6, dans lequel le capteur (10) est un capteur ionosensible de type ISFEC équivalent à une source de tension variable (24) de valeur $E_{Th}$ en série avec une impédance formée d'une capacité constante (26a) de valeur $C_{Th}$ et une résistance (26b), dans lequel l'impédance additionnelle (12) présente une capacité de valeur C en parallèle avec une résistance de valeur R, dans lequel une résistance (28) de valeur $R_p$ est connectée en parallèle au capteur (10), et dans lequel les inégalités suivantes sont vérifiées :

$$I_G << I << I_0$$

$$V_{DS} < V_{GSo} < V_T < O$$

$$V_{GSo} < E_{Th}$$

$$\frac{C_{Th}}{C} > 1$$

$$\frac{C_{Rh}}{C} > \frac{R}{R_p}$$

où $V_T$, $I_G$, $I_o$, $V_{DS}$, $V_{GSo}$ et I sont respectivement une tension de seuil d'un transistor à effet de champ à canal P, utilisé comme moyen de contrôle de tension, un courant de grille du transistor, un courant de polarisation du transistor, une tension drain-source du transistor, une tension de grille-source d'équilibre du transistor et un courant traversant le capteur.

## Claims

1. An amplifying device for a voltage response sensor (10) comprising:

   - voltage control means (22), connected to sensor output terminals (16, 20) in order to impart a substantially constant voltage between said terminals, and
   - at least one additional impedance (12) connected in series with the sensor in a polarisation circuit,

   **characterised in that**
   the output terminals of the amplifier device are the terminals (18, 20) of the assembly constituted by the additional impedance (12) in series with the sensor (10).

2. A device according to claim 1, wherein the voltage control means (22) include a field effect transistor with a gate, a source and a drain, wherein the sensor (10) is connected between the transistor gate and source and wherein the additional impedance (12) is connected between the transistor gate and drain.

3. A device according to claim 1, wherein the transistor is of the MOS (Metal-Oxide-Semiconductor) type.

4. A device according to claim 1, comprising polarisation means (14) for polarising the transistor in a saturation state.

5. A device according to claim 2, wherein the polarisation means (14) include a source of power connected to the output terminals (18, 20) and between the transistor source and drain (22).

6. A physical unit measuring system comprising a voltage response sensor (10) and an amplifying device according to claim 1.

7. A measuring system according to claim 6, wherein the sensor is a thermocouple.

8. A system according to claim 7, wherein the sensor has a thermoelectric potential (24) having a value $E_{Th}$ and impedance (26) having a purely resistive value $R_{Th}$, wherein the additional impedance (12) has a resistive value R, and wherein the following inequalities are verified:

$$I_G \ll I \ll I_0$$

$$0 < V_T < V_{GSo} < V_{DS}$$

$$E_{Th} < V_{GSo}$$

$$\frac{R}{R_{Th}} > 1$$

where $V_T$, $I_G$, $I_0$, $V_{DS}$, $V_{GSo}$ and I are a threshold voltage of a N-channel field-effect transistor, used as voltage control means, a transistor gate current, a transistor polarisation current, a transistor drain-source voltage, a transistor balance gate-source voltage and a current going through the sensor, respectively.

9. A system according to claim 6, wherein the sensor is an MOS dosimeter equivalent to a variable voltage source (24) having a value $E_{Th}$ and having impedance (26) having a capacitive value $C_{Th}$, wherein the additional impedance (12) has a capacitive impedance C and wherein the following inequalities are verified:

$$I_G << I << I_0$$

$$V_{DS} < V_{GSo} < V_T < 0$$

$$V_{GSo} < E_{Th}$$

$$\frac{C_{Th}}{C} > 1$$

where $V_T$, $I_G$, $I_0$, $V_{DS}$, $V_{GSo}$ and I are a threshold voltage of a P-channel field-effect transistor, used as voltage control means, a transistor gate current, a transistor polarisation current, a transistor drain-source voltage, a transistor balance gate-source voltage and a current going through the sensor, respectively.

10. A system according to claim 6, wherein the sensor (10) is an ion-sensitive sensor of the ISFEC type, equivalent to a variable voltage source (24) having a value $E_{Th}$ in series with an impedance formed of a constant capacity (26a) having a value $C_{Th}$ and a resistance (26b), wherein the additional impedance (12) has a capacity having a value C in parallel with a resistance having a value R, wherein a resistance (28) having a value $R_p$ is connected in parallel to the sensor (10) and wherein the following inequalities are verified:

$$I_G << I << I_0$$

$$V_{DS} < V_{GSo} < V_T < 0$$

$$V_{GSo} < E_{Th}$$

$$\frac{C_{Th}}{C} > 1$$

$$\frac{C_{Rh}}{C} > 1 \gg \frac{R}{R_p}$$

where $V_T$, $I_G$, $I_0$, $V_{DS}$, $V_{GSo}$ and I are a threshold voltage of a P-channel field-effect transistor, used as voltage control means, a transistor gate current, a transistor polarisation current, a transistor drain-source voltage, a transistor balance gate-source voltage and a current going through the sensor, respectively.

**Patentansprüche**

1. Verstärkungsvorrichtung für Sensor (10) mit Spannungsantwort, bestehend aus
   - Mitteln zur Spannungskontrolle (22), die an Ausgangsklemmen (16, 20) des Sensors angeschlossen sind, u m zwischen den genannten Klemmen eine im Wesentlichen konstante Spannung anzulegen, und
   - mindestens einer zusätzlichen Impedanz (12), die in Serie mit dem Sensor in einer Polarisierungsschaltung geschaltet ist, **dadurch gekennzeichnet, dass** die Ausgangsklemmen der Verstärkungsvorrichtung die Klemmen (18, 20) der durch die zusätzliche Impedanz (12) i n Serie mit dem Sensor (10) gebildeten Einheit sind.

2. Vorrichtung nach Anspruch 1, bei der die Mittel zur Spannungskontrolle (22) einen Transistor mit Feldeffekt, mit einem Gitter, einer Quelle und einem Drain umfassen, bei der der Sensor (10) zwischen dem Gitter und der Quelle des Transistors geschaltet ist, und bei der die zusätzliche Impedanz (12) zwischen dem Gitter und dem Drain des Transistors geschaltet ist.

3. Vorrichtung nach Anspruch 1, bei der der Transistor ein Transistor vom Type MOS (Metalloxydhalbleiter) ist.

4. Vorrichtung nach Anspruch 1, die Polarisierungsmittel (14) umfasst, u m den Transistor in einer Übersteuerung zu polarisieren.

5. Vorrichtung nach Anspruch 2, bei der die Polarisierungsmittel (14) eine Stromquelle umfassen, die an den Ausgangsklemmen (18, 20) u n d zwischen der Quelle und dem Drain des Transistors (22) geschaltet ist.

6. System zur Messung einer physikalischen Größe, welches einen Sensor (10) mit Spannungsantwort und eine Verstärkungsvorrichtung nach Anspruch 1 umfasst.

7. System nach Anspruch 6, bei dem der Sensor ein Thermoelement ist.

8. System nach Anspruch 7, bei dem der Sensor ein thermoelektrisches Potential (24) mit einem Wert ETh und eine Impedanz (26) mit einem rein resistiven Wert $R_{Th}$ aufweist, bei dem die zusätzliche Impedanz (12) einen resistiven Wert R aufweist, und bei dem die folgenden Ungleichungen vérifiziert sind:

$$I_G \ll I \ll I_0$$

$$0 < V_T < V_{GSo} < V_{DS}$$

$$E_{Th} < V_{GSo}$$

$$R / R_{Th} > 1$$

wobei $V_T$, $I_G$, $I_0$, $V_{DS}$, $V_{GSo}$ und I jemeils eine Schwellenspannung eines Transistors mit Feldeffekt mit Kanal N, der als Mittel zur Kontrolle der Spannung benutzt wird, ei n Gitterstrom des Transistors, ei n Polarisierungstrom des Transistors, eine Spannung Drain-Quelle des Transistors, eine Stabilisierungsspannung Gitter-Quelle des Transistors, und ein Strom, der durch den Sensor hindurch fließt, sind.

9. System nach Anspruch 6, bei dem der Sensor ein MOS - Dosimeter ist, der einer variablen Spannungsquelle (24) mit Wert ETh 5entspricht und eine Impedanz (26) mit einem kapazitiven Wert $C_{Th}$ aufweist, bei dem die zusätzliche Impedanz (12) eine kapazitive Impedanz C aufweist, u n d bei dem die folgenden Ungleichungen verifiziert sind:

$$I_G \ll I \ll I_o$$

$$V_{DS} < V_{GSo} < V_T < O$$

$$V_{GSo} < E_{Th}$$

$$C_{Th}/C > 1$$

wobei $V_T$, $I_G$, $I_0$, $V_{DS}$, $V_{GSo}$ und I jeweils eine Schwellenspannung eines Transistors mit Feldeffekt mit Kanal P, der als Mittel zur Kontrolle der Spannung benutzt wird, ei n Gitterstrom des Transistors, ein Polarisierungsstrom des Transistors, eine Spannung Drain-Quelle des Transistors, eine Stabilisierungsspannung Gitter-Quelle des Transistors, und ein Strom, der durch den Sensor hindurch fließt, sind.

10. System nach Anspruch 6, bei dem der Sensor (10) ein ionenselektiver Sensor vom Type ISFEC ist, der einer Quelle variabler Spannung (24) mit Wert $E_{Th}$ entspricht, in Serie mit einer durch eine konstante Kapazität (26a) mit Wert $C_{Th}$ und eine n Widerstand (26b) gebildeter Impedanz, bei dem die zusätzlichen Impedanz (12) eine Kapazität mit Wert Cparallel mit einem Widerstand mit Wert R aufweist, bei dem ein Widerstand (28) mit Wert $R_p$ parallel mit dem Sensor (10) geschaltet ist, und bei dem die folgenden Ungleichungen verifiziert sind:

$$I_G \ll I \ll I_o$$

$$V_{DS} < V_{GSO} < V_T < O$$

$$V_{GSO} < E_{Th}$$

$$C_{Th}/C > 1$$

$$C_{Rh}/C > R/R_p$$

wobei i $V_T$, $I_G$, $I_0$, $V_{DS}$, $V_{GS_0}$ und I jeweils eine Schwellenspannung eines Transistors mit Feldeffekt mit Kanal P, der als Mittel zur Kontrolle der Spannung benutzt wird, ei n Gitterstrom des Transistors, ei n Polarisierungsstrom des Transistors, eine Spannung Drain-Quelle des Transistors, eine Stabilisierungsspannung Gitter-Quelle des Transistors, und ein Strom, der durch den Sensor hindurch fließt, sind.

FIG. 1

FIG. 2

FIG. 3

FIG. 4

FIG. 5

FIG. 6

FIG. 7

**EP 1 259 779 B1**

## RÉFÉRENCES CITÉES DANS LA DESCRIPTION

**Documents brevets cités dans la description**

- US 4513616 A